(19)

Europäisches
Patentamt
European
Patent Office
Office européen
des brevets

(11)  **EP 4 417 315 B1**

(12)  **EUROPEAN PATENT SPECIFICATION**

(45) Date of publication and mention
of the grant of the patent:
**12.11.2025  Bulletin 2025/46**

(51) International Patent Classification (IPC):
**B04B 5/00** (2006.01)     **B04B 13/00** (2006.01)

(21) Application number: **23156678.7**

(52) Cooperative Patent Classification (CPC):
**B04B 5/005; B04B 13/00**

(22) Date of filing: **15.02.2023**

(54) **METHOD AND SYSTEM FOR DETERMINING LOADING OF ROTOR FOR CENTRIFUGAL
SEPARATOR**

VERFAHREN UND SYSTEM ZUR BESTIMMUNG DER ROTORBELASTUNG FÜR
ZENTRIFUGALABSCHEIDER

PROCÉDÉ ET SYSTÈME DE DÉTERMINATION DE CHARGE DE ROTOR POUR SÉPARATEUR
CENTRIFUGE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**21.08.2024  Bulletin 2024/34**

(73) Proprietor: **MANN+HUMMEL Ventures Pte. Ltd.
Singapore 139234 (SG)**

(72) Inventors:
• **PRABHAKAR, Vikas Jilakarapalli
560037 Bengaluru (IN)**

• **FELL, Anthony W.
Somerset, BA21 3SE (GB)**
• **FLETCHER, Neil
Somerset, TA23 0HZ (GB)**

(74) Representative: **Mann + Hummel Intellectual
Property
Mann + Hummel
International GmbH & Co. KG
Schwieberdinger Straße 126
71636 Ludwigsburg (DE)**

(56) References cited:
**WO-A1-2017/077294     DE-A1- 4 403 425
US-A- 4 221 323**

## Description

## Technical Field

An aspect of the disclosure relates to a method of determining a loading of a rotor of a centrifugal separator arrangement. Another aspect of the disclosure relates to a system configured to carry out the method.

## Background Art

Centrifugal separators are devices that work on the principle of using centrifugal forces to separate various components of or from a fluid. This is achieved by spinning the fluid at high speed in a centrifugal separator, thereby separating fluids of different densities or liquids from solids. In a rotor of the centrifugal separator, denser substances and particles (e.g., particulate contaminants) move outward in the radial direction and compact along a wall of the rotor to form a dense cake. At the same time, medium that is less dense (e.g., clean fluid) is displaced and moved to the center of the rotor. Maintenance of such centrifugal separators to remove the dense cake from the wall may involve removing a cover of the rotor and then removing the rotor from its bearing (e.g., a spindle).

On one hand, such a maintenance operation is frequently not necessary, because the accumulation of the dense cake on the wall of the rotor may not yet have reached a stage that warrants/requires removal. However, using conventional maintenance methods, the stage of the dense cake on the wall of the rotor is typically unknown to the operator until after the centrifugal separator is disassembled, which may lead to unnecessary disassembly of the centrifugal separators. This unnecessary disassembly may result in unnecessary downtime of the centrifugal separator, a waste of manpower and a decrease in efficiency. On the other hand, if the rotor was allowed to continue in operation for too long, the dense cake could fall into the clean fluid, thereby contaminating the clean fluid, which may result in an inefficient separation. Moreover, the dense cake may collapse and restrict the oil flow, affecting the rotor performance.
An example of such a method and a device is disclosed by WO2017077294. a

Thus, there is a need to provide for an improved maintenance method.

## Summary

An aspect of the disclosure relates to a method of determining a loading of a rotor of a centrifugal separator arrangement. The centrifugal separator arrangement may include a centrifugal separator. The centrifugal separator may include a stationary casing defining an enclosure. The centrifugal separator may include the rotor including a wall defining an inner volume, wherein the rotor may be rotatably mounted in the enclosure to rotate about a rotation axis, optionally about a longitudinal rotation axis. The centrifugal separator may include a feed passage for supplying a contaminated fluid including particulate contaminant and allowing the contaminated fluid to flow to the inner volume of the rotor. The centrifugal separator may include an egress opening for releasing a cleaned fluid from the centrifugal separator, wherein a rotor outlet channel may be configured to allow the cleaned fluid to egress in a direction including a tangential component with respect to the rotation axis, thereby causing an angular displacement of the rotor when the contaminated fluid is applied via the feed passage at a fluid pressure above a fluid pressure threshold, thereby causing the rotor to rotate. The centrifugal separator arrangement may further include a rotation sensor configured to measure a rotation of the rotor and produce corresponding rotor rotation data.

The method may include providing transient control parameters for controlling an applied fluid pressure. The method may include producing a change in a rotation frequency of the rotor by modifying the fluid pressure of the contaminated fluid applied to the feed passage according to the transient control parameters. The method may include receiving, from the rotation sensor, rotor rotation data corresponding to the change in the rotation frequency of the rotor. The method may include determining a load of accumulated particulate contaminant separated from the cleaned fluid caused by the particulate contaminant deposited on an inner surface of the wall, wherein the loading of the rotor may be determined based on the rotor rotation data and the transient control parameters.

According to various embodiments, the transient control parameters may be indicative of a change in operation of a fluid pumping system.

According to various embodiments, the transient control parameters may be indicative of a start of an engine or a change in an engine load.

According to various embodiments, the transient control parameters may be indicative of a change of a fluid temperature and/or a change of the fluid pressure. In some embodiments, the change of fluid temperature may be a change in temperature of the cleaned fluid or may be a change in temperature of the contaminated fluid.

According to various embodiments, fluid pressures at different time stamps may be included by or derived from the transient control parameters. Further, the rotor rotation data may include a plurality of data points each having a different time stamp. The method may further include matching the plurality of data points or information derived therefrom against reference data, obtaining a corresponding loading factor. The method may further include using the corresponding loading factor or a value derived therefrom as the loading of the rotor. For example, the method may include setting the loading of the rotor to the corresponding loading factor or a value derived therefrom.

According to various embodiments, the reference data may include reference data points and corresponding loading factors corresponding to the reference data points.

According to various embodiments, the plurality of data points may include 10 or more data points, and the reference data may include model reference data points and corresponding loading factors corresponding to the model reference data points. The method may include extracting coefficients from the plurality of data points included in the rotor rotation data as information derived from the plurality of the data points. The matching may include selecting model reference data points nearest to the extracted coefficients.

According to various embodiments, the method may further include providing fluid pressure data including two or more fluid pressure points, each having a different time stamp. The method may further include providing fluid temperature data including two or more fluid temperature points. The two or more fluid temperature points may include, or be, two or more fluid temperature points indicating a temperature of the cleaned fluid, or two or more fluid temperature points indicating a temperature of the contaminated fluid. Each of the two or more fluid temperature points may have a different time stamp. For example, the time stamp may be data indicating on which date and at which time a respective fluid pressure point/fluid temperature point has been recorded.

According to various embodiments, the method may further include determining an expected time necessary for achieving a pre-determined rotation based on the two or more fluid pressure points at/having the different time stamps and the two or more fluid temperature points having the different time stamps, determining the rotor loading based on a difference of the expected time with a measured time necessary for achieving the pre-determined rotation.

According to various embodiments, (i) the pre-determined rotation may include a rotation frequency of an operation mode and the initial state may be a resting state of zero rotation frequency; or (ii) the initial state may be an operation mode with an operation rotation frequency different than zero and the pre-determined rotation may include a rotation frequency lower than the operation rotation frequency, optionally wherein the rotation frequency is zero.

According to various embodiments, the method may further include determining whether a direction of change in rotation frequency of the rotor is indicative of a positive acceleration or indicative of a negative acceleration.

According to various embodiments, the method may further include determining an expected rotation frequency expected from a pre-determined time based on the two or more fluid pressure points having the different time stamps and the two or more fluid temperature points having the different time stamps. In one example, the two or more fluid temperature points may have the same different time stamps as the two or more fluid pressure points.

According to various embodiments, the method may further include determining the rotor loading based on a difference of the expected rotation frequency with a measured rotation frequency at the different time stamps.

According to various embodiments, the fluid pressure points having the different time stamps may be included by or derived from the transient control parameters.

An aspect of the disclosure relates to a fluid cleaning system configured to provide a determination of a loading of a rotor of a centrifugal separator arrangement according to the method described herein, the system including the centrifugal separator, the rotation sensor, and a microprocessor.

According to various embodiments, the rotation sensor may be attached to the centrifugal separator, and may optionally be non-removably attached.

According to various embodiments, the rotation sensor may be a hall effect sensor, a magnetoresistive sensor, a giant magnetoresistive sensor, or a combination thereof.

According to various embodiments, the fluid cleaning system may include a determination circuit configured to determine whether the rotor rotation data is indicative of a positive or a negative acceleration, and, if determined that it is a negative acceleration, it may be further configured to determine a time necessary for achieving a threshold low rotation; or determine a time necessary for achieving a stable state, based on a determined reference rotation and determined change in pressure.

## Brief Description of Drawings

The drawings show:

FIG. 1 A conventional centrifugal separator.

FIG. 2A A centrifugal separator arrangement in accordance with various embodiments.

FIG. 2B A centrifugal separator arrangement in accordance with various embodiments.

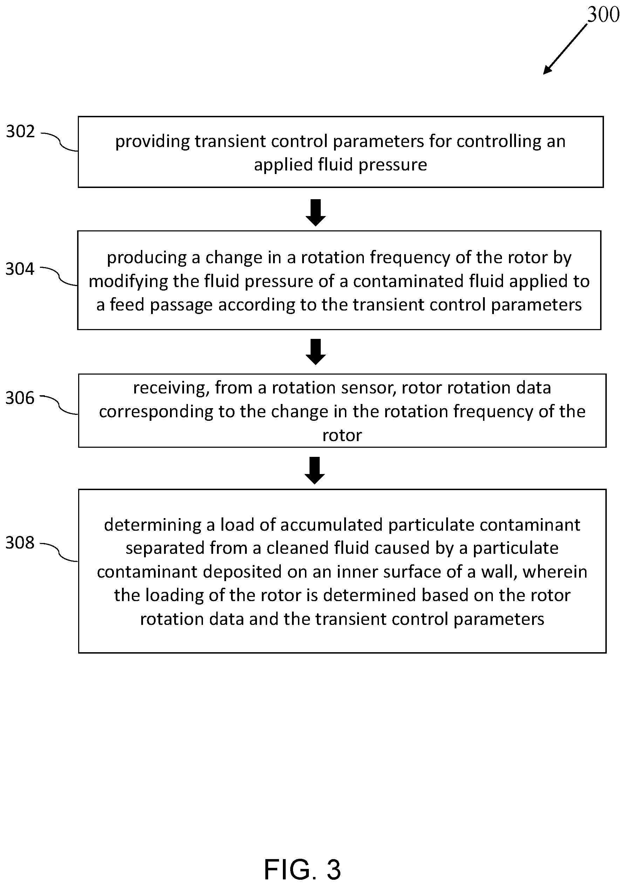

FIG. 3 A method of determining a loading of a rotor of a centrifugal separator arrangement in accordance with various embodiments.

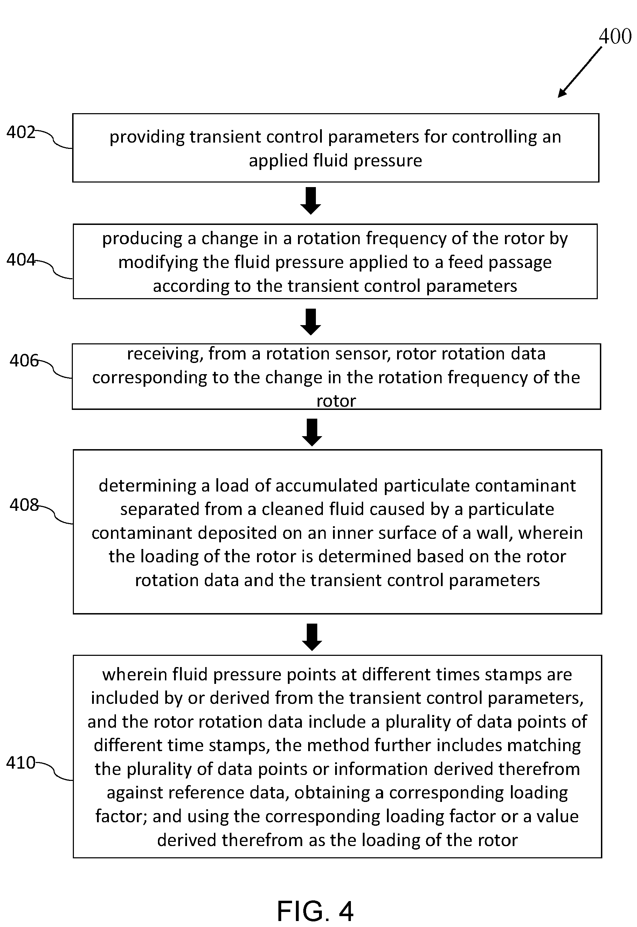

FIG. 4 A method of determining a loading of a rotor of a centrifugal separator arrangement in accordance with various embodiments.

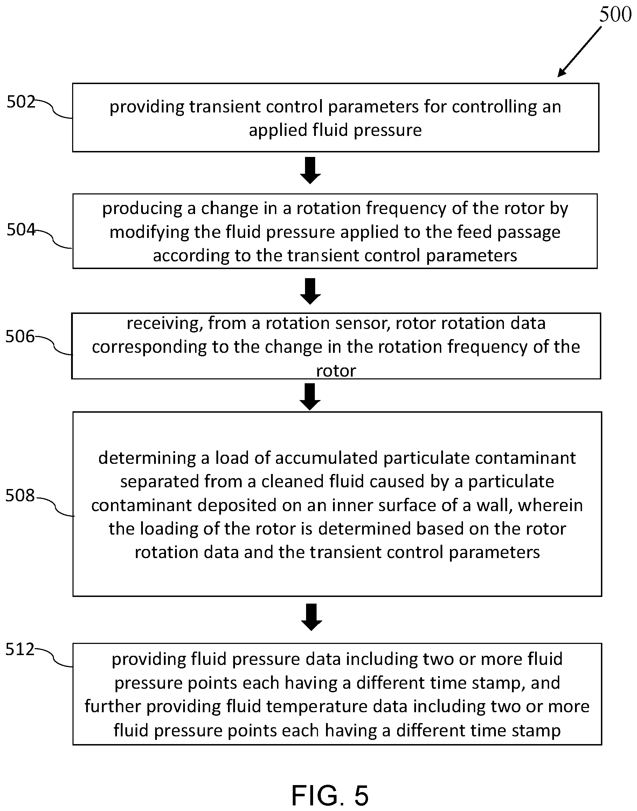

FIG. 5 A method of determining a loading of a rotor of a centrifugal separator arrangement in accordance with various embodiments.

FIG. 6 A fluid cleaning system in accordance with various embodiments.

FIG. 7 A graph showing one example of determining a loading of a rotor of a centrifugal separator arrangement in accordance with various embodiments.

FIG. 8 An illustration of a curve fitting in accordance with various embodiments.

## Detailed Description

The following detailed description refers to the accompanying drawings that show, by way of illustration, specific details and embodiments in which the disclosure may be practiced. These embodiments are described in sufficient detail to enable those skilled in the art to practice the disclosure. Other embodiments may be utilized and structural, and logical changes may be made without departing from the scope of the disclosure. The various embodiments are not necessarily mutually exclusive, as some embodiments can be combined with one or more other embodiments to form new embodiments.

Embodiments described in the context of one of a centrifugal separator arrangement, a method for determining a loading of a centrifugal separator arrangement, and a fluid cleaning system are analogously valid for the other centrifugal separator arrangement, method for determining a loading of a centrifugal separator arrangement, and fluid cleaning system.

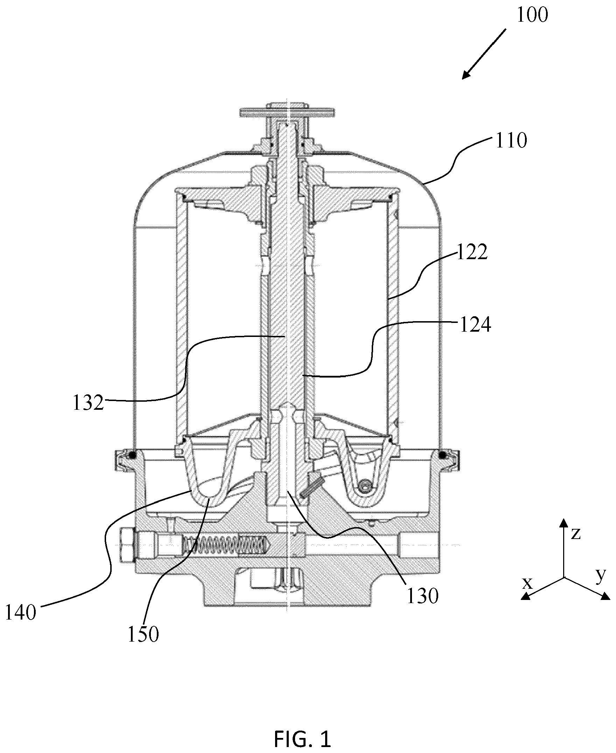

FIG. 1 shows a conventional centrifugal separator 100. The centrifugal separator 100 may include a stationary casing 110, a rotor 120 which may be rotatably mounted (e.g., on a spindle 124 having an inner wall 132) in an enclosure defined by the stationary casing 110, a feed passage 130 for loading the inner volume of the rotor 120 with a contaminated fluid including particulate contaminants. In operation, the rotor 120 may be entirely filled with the contaminated fluid including particulate contaminants, and then a cleaned fluid may be allowed to exit through an egress 140 and into a rotor outlet channel 150 fitted in a bottom portion of the rotor 120. Under the action of centrifugal force, the particulate contaminants may move radially outwards to the inner wall 122 of the rotor 120, and may form contaminant layers (not shown) along the inner wall 122. The contaminant layers may compact and form a dense cake with continuous accumulation of these particulate contaminants under the centrifugal force. After a certain interval of time, the rotor 120 may require cleaning to remove the accumulation of these particulate contaminants and requires subsequent re-assembly. The difficulty encountered with a conventional centrifugal separator 100 is, that the time at which the rotor 120 may require cleaning and re-assembly is generally unknown. Hence, it may occur that the centrifugal separator may be opened and disassembled, and only then it is discovered that the rotor 120 does not yet require cleaning. In these instances, the centrifugal separator 100 would have been unnecessarily disassembled, which may result in unnecessary downtime of the centrifugal separator 100, a waste of manpower and a decrease in efficiency. In a different scenario, if the rotor 120 was allowed to continue in operation for too long, the dense cake of accumulation of these particulate contaminants could fall into the clean fluid, thereby contaminating the clean fluid, which decreases the quality of the cleaning.

To address these shortcomings, there is provided a method of determining a loading of a rotor of a centrifugal separator arrangement, wherein the centrifugal separator arrangement may include some or all of the components of the centrifugal separator 100, and additionally includes a rotation sensor configured to measure a rotation of the rotor and produce corresponding rotor rotation data.

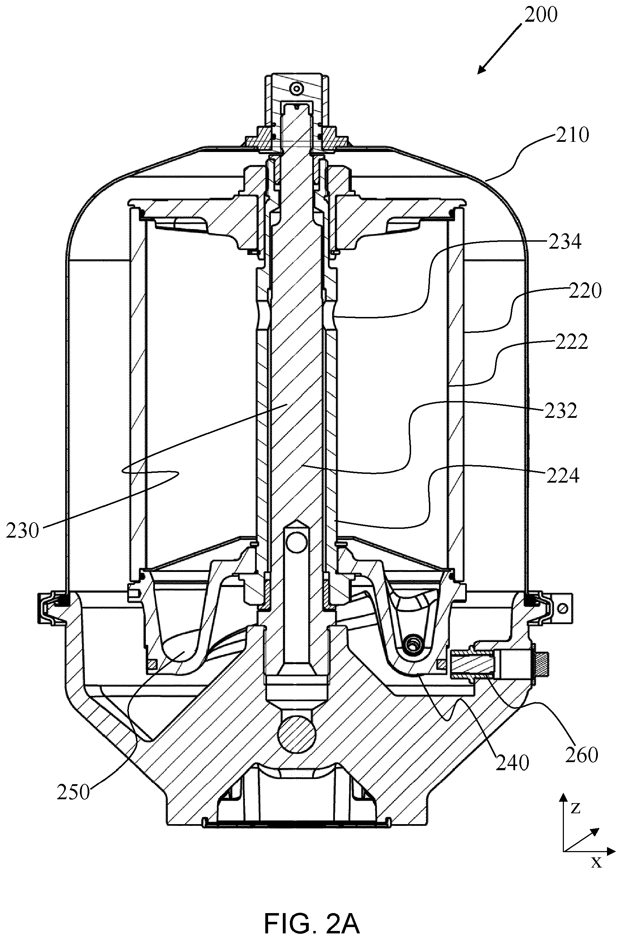

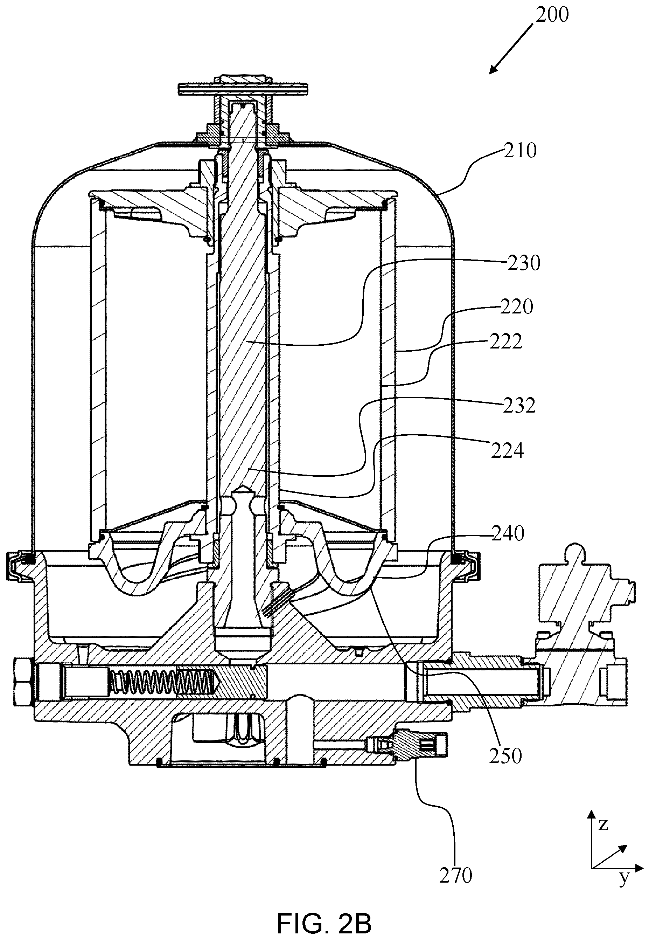

The centrifugal separator arrangement 200 of the method in accordance with various embodiments is illustrated in FIG. 2A and FIG. 2B. As shown therein, a centrifugal separator arrangement 200 may include a stationary casing 210. The stationary casing 210 may have a fixed position, for example fixed in relation to an engine (e.g., a motor, e.g., an electric motor), or a fluid cleaning system. Other parts of the centrifugal separator may be in motion in relation to the stationary casing 210. The stationary casing 210 may have a cylindrical shape. A top edge of the stationary casing 210 may be rounded, such that the top of the stationary casing 210 may resemble a bell shape. The stationary casing 210 may define an enclosure within the stationary casing 210. In other words, the stationary casing 210 may be configured to house remaining components of the centrifugal separator arrangement 200 therein.

According to various embodiments, a material of the stationary casing 210 may include, or may be, a metal or a metal alloy. For example, the material of the stationary casing 210 may include aluminum, or an aluminum alloy. In some embodiments, the material of the stationary casing 210 may be diamagnetic.

The centrifugal separator arrangement 200 may further include a rotor 220 which may be rotatably mounted (e.g., around a rotation axis) in an enclosure defined by the stationary casing 210. The rotation axis may be a longitudinal rotation axis. In other words, while the stationary casing 210 may be configured to be affixed to a structure, the rotor 220 may be configured to be in rotating motion (e.g., around the rotation axis) in relation to the stationary casing 210. The rotor 220 may be substantially enclosed within the stationary casing 210. The rotor 220 may have a cylindrical shape and may follow the contours of the stationary casing 210 at a smaller diameter of the cylinder than that of the stationary casing 210. The rotor 220 may include a wall 222 defining an inner volume. The inner volume may surround the rotation axis (e.g., in a rotationally symmetric manner). The wall 222 may therefore be positioned towards the center of the rotor, *i.e.* facing away from the stationary casing 210. In some embodiments, the rotor 220 may be rotatably mounted within the stationary casing 210 by being mounted on a spindle 224.

According to various embodiments, a material of the rotor 220 may include, or may be, a metal or a metal alloy. For example, the material of the rotor 220 may include aluminum, or an aluminum alloy. Advantageously, the material of the rotor 220 may be diamagnetic.

The centrifugal separator arrangement 200 may further include a feed passage 230. The feed passage 230 may be defined by an inner wall 232 of the spindle 224 and may extend in an axial direction (identified as a direction z in FIG. 2A and FIG. 2B) within the rotor 220. The feed passage 230 may be configured to supply a contaminated fluid including particulate contaminants. In particular, the feed passage 230 may allow the contaminated fluid including particulate contaminants to flow through the feed passage 230 and into the inner volume of the rotor 220.

The contaminated fluid including particulate contaminants may be referred to as a fluid and, dissolved or dispersed therein, particulate contaminants. According to various embodiments, the contaminated fluid including particulate contaminants enters, or is pumped into, the feed passage 230. In other words, the contaminated fluid entering the rotor 220 may typically contain particulate contaminants. The contaminated fluid may then be caused, under application of centrifugal force, to be cleaned from the particulate contaminants. Additionally or alternatively, the particulate contaminants may be caused, under application of centrifugal force, to be removed (e.g., separated) from the contaminated fluid before the fluid exits the rotor 220. The fluid that exits the rotor 220 may be referred to as a cleaned fluid that contains relatively less contaminants than the contaminated fluid including particulate contaminants. Accordingly, the fluid including less particulate contaminants than the contaminated fluid may be referred to as a cleaned fluid. Cleaning may be carried out over one or more cycles of the fluid passing through the rotor. The fluid may include, or consist of, an inorganic fluid, e.g., it may be water. Alternatively, the fluid may be an organic fluid, an organic fluid, e.g., it may be a hydrocarbon, e.g., oil.

The contaminated fluid including particulate contaminants may enter into the feed passage 230 of the centrifugal separator under an applied fluid pressure and may be further directed into the rotor 220 via an inlet passage, e.g., a cross drilling 234. The rotor 220 may be entirely filled with the contaminated fluid including particulate contaminants and then a cleaned fluid may be allowed to exit through an egress opening 240 and into a rotor outlet channel 250 fitted in a bottom portion of the rotor 220. The cleaned fluid may exit through the egress opening 240 with a tangential component with respect to the rotation axis, e.g., such that a torque may be generated in an opposite direction of the egress opening of the cleaned fluid. Said torque may generate rotation of the rotor 220. This rotation may, in turn, generate a centrifugal force in the contaminated fluid including particulate contaminants within the rotor 220. As particulate contaminants along with the contaminated fluid enter the rotor 220, these may be subjected to the centrifugal force. Under the action of this centrifugal force, the particulate contaminants may move radially outwards to the inner wall 222 of the rotor 220, and may deposit, e.g., as contaminant layers, along the inner wall 222. The contaminant layers may compact and form a dense cake (not shown) with a continuous accumulation of these particulate contaminants under the centrifugal force. The dense cake may also be referred to as a load of the accumulated particulate contaminant that is configured to be separated from the cleaned fluid.

In order to determine a loading of the rotor 220, e.g., the weight of the total content of the rotor 220, which may provide an indication of a load of accumulated particulate contaminant, e.g., the stage of the dense cake, the method as presented herein takes advantage of the mathematical correlation between rotor rotation data and an applied fluid pressure, wherein the applied fluid pressure may be controlled by transient control parameters. In other words, since the loading of the rotor 220 correlates with a moment of inertia of the rotor 220, an angular acceleration of the rotor 220 would change depending on the loading, thereby providing for a determination of the stage of the dense cake without the necessity of disassembly of the centrifugal separator arrangement 200. For the measurement of the rotor rotation data, the centrifugal separator arrangement 200 may include a rotation sensor 260 configured to measure a rotation of the rotor 220 and produce corresponding rotor rotation data. For the measurement of the transient control parameters, the centrifugal separator arrangement 200 may include a detector 270, including, e.g., a temperature sensor and/or a pressure sensor.

Accordingly, there is provided a method 300 of determining a loading of a rotor of a centrifugal separator arrangement. The centrifugal separator arrangement may include some or all of the components of the centrifugal separator arrangement 200. The method 300 may include a step 302 of providing transient control parameters for controlling an applied fluid pressure. The method 300 may include a step 304 of producing a change in a rotation frequency of the rotor by modifying the fluid pressure applied to the feed passage according to the transient control parameters. The method 300 may include a step 306 of receiving, from the rotation sensor, rotor rotation data corresponding to the change in the rotation frequency of the rotor. The method 300 may include a step 308 of determining a load of accumulated particulate contaminant separated from the cleaned fluid caused by the particulate contaminant deposited on an inner surface of the wall. The loading of the rotor 220 may be determined based on the rotor rotation data and the transient control parameters.

The method 300 may address the shortcomings detailed above in relation with the unnecessary disassembly of the centrifugal separator arrangement and/or an inefficiency of separating the accumulated particulate contaminant from the cleaned fluid by providing a determination of the loading of the accumulated particulate contaminant in the rotor without the need of disassembling the centrifugal separator arrangement. Since there is no necessity for the disassembly of the centrifugal separator arrangement in order to determine the loading of the accumulated particulate contaminant in the rotor, resources such as time and manpower can be saved, thereby improving the operation efficiency of the centrifugal separator arrangement. Moreover, the method 300 is not selective to the type of the accumulated particulate contaminant, since it only requires a difference in mass of the loading of the rotor. Hence, the loading of all types of accumulated particulate contaminants may be determined by using this method 300.

The method 300 exploits the physical property that when a body is rotating, or is free to rotate around an axis, a torque must be applied to change its angular momentum. The amount of torque needed to cause any given angular acceleration (the rate of change in angular velocity) is proportional to the moment of inertia of the body. As the load of accumulated particulate contaminant (*i.e., the dense cake*) builds up inside rotor, the loading of the rotor will increase and the moment of inertia will change. Hence the torque needed to cause an angular acceleration is expected to change as well.

In further detail, theoretically, as the loading (e.g., the load of accumulated particulate contaminant) increases inside the rotor, the moment of inertia changes. Hence the time needed to reach a particular angular velocity is increased, according to the angular acceleration equation (1), as follows:

$$\alpha = \frac{\partial \omega}{\partial t} \qquad (1),$$

wherein $\alpha$ refers to the angular acceleration, $\partial \omega$ refers to a change in angular velocity and *∂t* refers to a change in time.

The torque correlates with the angular acceleration, according to rotational analogue of Newton's second law, as in the following equation (2):

$$\tau = I \, \alpha \qquad (2),$$

wherein $\tau$ refers to a torque and I refers to a moment of inertia.

In a next stage, a net torque may be determined, which may be the sum of the individual torques. If there was a rotational equilibrium, there would not be a net torque on the object. There may be individual torques, but they would balance each other out of the equation.

In this case the net torque may be calculated as the applied torque $\tau_A$, which may correlate with the rotation frequency of the rotor, minus the frictional torque. The frictional torque may include bearing friction $\tau_{JB}$ (e.g., friction between the bearing and the rotor), thrust bearing $\tau_{TH}$ (e.g., lifting of the rotor due to a change in the diameters at the top and at the bottom bearings), air drag $\tau_{drag}$ on the rotor and rotor losses $\tau_{loss}$. The following equation (3) summarizes the calculation of the net torque as follows:

$$\tau_{net} = \tau_A - (\tau_{JB} + \tau_{TH} + \tau_{drag} + \tau_{loss}) \qquad (3)$$

With equation (3), equation (2) may then be rewritten as in equation (4):

$$\tau_{net} = I \, \alpha \qquad (4)$$

According to the afore mentioned equations, a change in the moment of inertia $I$, and therefore a change in the loading of the rotor, has a determinable effect on the angular acceleration of the rotor $\alpha$ and can be determined by differentiating equation (4) or computer implementations and/or finite approximations thereof, e.g., using a difference operator.

The method 300 may therefore rely on the angular acceleration $\alpha$ of the rotor, which may be measured as a change in rotation frequency of the rotor. Such a change in rotation frequency may include modifying the fluid pressure, which may be effected by providing transient control parameters. The transient control parameters are therefore defined as parameters that are configured to be controlled by the operator and wherein a change of the transient control parameters may directly or indirectly produce a pressure change of the fluid that is pumped into the feed passage.

The produced change in rotation frequency of the rotor may subsequently be measured using the rotation sensor. The rotation sensor may transmit the change in rotation frequency to a microprocessor in the form of rotor rotation data. After the microprocessor receives the rotor rotation data that are measured during the change in the rotation frequency, the microprocessor may determine a load of the accumulated particulate contaminant from fluid by a particulate contaminant deposited on an inner surface of the wall of the rotor based on the loading of the rotor. As stated above, the loading may be determined based on the rotor rotation data and the transient control parameters.

According to various embodiments, the transient control parameters may be indicative of a change in operation of a fluid pumping system. In some embodiments, the change in operation of a fluid pumping system may include interrupting or stopping the flow of the fluid to the feed passage. In other embodiments, the change in operation of a fluid pumping system may include starting or accelerating the flow of the fluid to the feed passage. In other embodiments, the change in operation of a fluid pumping system may include reversing. For example, the transient control parameters may involve a start of an engine (e.g., a motor, e.g., an electric motor) or an increase of an engine load of an engine (e.g., a motor, e.g., an electric motor) that produces a fluid pressure through the fluid pumping system. Alternatively, the transient control parameters may involve the stop or the decrease of engine load of an engine that is configured to operate the fluid pressure through the fluid pumping system. Additionally or alternatively, the transient control parameters may involve a change in a temperature of the fluid (e.g., of the cleaned fluid, e.g., of the contaminated fluid), which may produce, or be indicative for, a change in the fluid pressure. Additionally or alternatively, the change in the temperature of the fluid may change the viscosity of the fluid, which may produce, or be indicative for, a change in the fluid pressure.

According to various embodiments, there may be provided a method 400, wherein reference data are used in a calibration. The method 400 may include some or all of the method steps of the method 300, and may additionally include a step, in which fluid pressure points at different time stamps are included by or derived from the transient control parameters, and whereby the rotor rotation data include a plurality of data points of different time stamps (e.g., of the same different time stamps as of the fluid pressure points), and the method 400 may further include a step 410 of matching the plurality of data points or information derived therefrom against reference data, obtaining a corresponding loading factor; and using the corresponding loading factor or a value derived therefrom as the loading of the rotor, e.g., setting the loading of the rotor to the corresponding loading factor or a value derived therefrom.

For example, fluid pressure points at different time stamps (e.g., at a time $t_0, t_1, t_2, ..., t_n$) may be included in or derived from the transient control parameters and the rotor rotation data may include a plurality of data points at/having different time stamps (e.g., at a time $t_0, t_1, t_2, ..., t_n$). The method 400 may then include matching the plurality of data points or information derived therefrom against the reference data. A corresponding loading factor may be determined based on said matching and the corresponding loading factor or a value derived therefrom may be used to determine the loading of the rotor. The calibration method 400 may be carried out based on a temperature measurement or based on the type of fluid. Advantageously, by determining the loading of the centrifugal separator arrangement using a calibration method 400 as described herein, frictional torque that may not be considered in the applied torque would not result in any uncertainty, since the determination of the loading is based on reference data rather than being determined purely mathematically. Hence, the reference data may include reference data points which may be obtained, e.g., by loading a reference centrifugal separator arrangement under controlled conditions, and determining corresponding loading factors from the reference data points.

The rotor rotation data may, in some embodiments, describe a curve. For example, in some embodiments, the plurality of data points may include 10 or more data points at/having different time stamps (e.g., at a time $t_0, t_1, t_2, ..., t_0, ..., t_n$) and the reference data may include model reference data points that may be obtained by loading the reference centrifugal separator under controlled conditions, and a corresponding loading factor. The method 400 may then further include extracting coefficients of the plurality of data points included in the rotor rotation data as information derived from the plurality of the data points, which may involve mathematical operations such as fitting a curve, determining a 2nd derivative, and/or fitting a polynomial to an nth degree (n being an integer equal to 2 or larger). The matching may then include selecting model reference data points nearest to the extracted coefficients.

According to various embodiments, there may be provided a method 500, wherein fluid pressure data points are measured, each having a different time stamp. Accordingly, the method 500 may include some or all of the method steps of the method 300, and may additionally include a step 512 of providing fluid pressure data including two or more fluid pressure points each having a different time stamp, and further providing fluid temperature data points, each having a different time stamp. In other words, the fluid pressure data may include two or more fluid pressure points, wherein each of the two or more fluid pressure points may have a different time stamp (e.g., at a time $t_0, t_1, t_2, ..., t_n$). The fluid pressure points at/having different time stamps may be included in or may be derived from the transient control parameters. Based on the two or more fluid pressure points obtained at the different time stamps, an expected time may be determined at which a pre-determined rotation would be achieved. The rotor loading may then be determined based on a difference of the expected time with a measured time, wherein the measured time at which a pre-determined rotation would be achieved may be obtained from the rotor rotation data. In embodiments where the fluid temperature would vary during the measurement, the method may additionally include measuring fluid temperature data points each having/at a different time stamp (e.g., at a time $t_0, t_1, t_2, ..., t_n$) and determining an expected time necessary for achieving the pre-determined rotation based on the fluid pressure points having/at different time stamps and the fluid temperature points having/at different time stamps.

The pre-determined rotation may include, or consist of, a rotation frequency of an operation mode and an initial state may be a resting state of zero rotation frequency (e.g., at a time $t_0$). Alternatively, the initial state may be an operation mode with an operation rotation frequency different than zero (e.g., at a time $t_n$) and the pre-determined rotation may include, or consist of, a rotation frequency lower than the operation rotation frequency, and may be optionally zero.

The method 500 may further include determining whether a direction of a change in the rotation frequency of the rotor may be indicative of a positive acceleration, which may imply a start of the engine or an increase in the engine load that is configured to operate the fluid pressure through the fluid pumping system. Alternatively, the method 500 may further include the determination whether a direction of a change in the rotation frequency of the rotor may be indicative of a negative acceleration, which may imply a stop of the engine or a decrease of the engine load that is configured to operate the fluid pressure through the fluid pumping system.

The method 500 may include determining an expected rotation frequency that may be expected from a pre-determined time based on the fluid pressure points having/at different time stamps and fluid temperature points having/at different time stamps, wherein the fluid pressure points having/at different time stamps may be included in or may be derived from the transient control parameters, and determining the rotor loading based on a difference of the expected rotation frequency with a measured rotation frequency. The measured rotation frequency may be obtained through rotor rotation data.

According to another aspect, there may be provided a method of determining a loading of a rotor of a centrifugal separator arrangement, the centrifugal separator arrangement being described as herein before. The method may include detecting a transient event causing a modification in an applied fluid pressure. The detection may be provided by the detector, which may optionally be included in the centrifugal separator arrangement. The detector may be configured to detect a change of a transient parameter. The change of the transient parameter may include, for example, a change of a temperature of the fluid and/or a change of a temperature of the fluid. Accordingly, the detector may include, or be, a pressure sensor and/or a temperature sensor. The change of the transient parameter may include a spontaneous (e.g., uncontrolled) change of the transient parameter.

The method may further include detecting a change in a rotation frequency of the rotor being produced by the modification in the fluid pressure applied to the feed passage according to the transient event, for example according to the change in the transient parameter. The method may further include receiving, from the rotation sensor, rotor rotation data corresponding to the change in the rotation frequency of the rotor. The method may further include determining a load of accumulated particulate contaminant separated from the cleaned fluid of the rotor caused by the particulate contaminant deposited on an inner surface of the wall, wherein the loading of the rotor may be determined based on the rotor rotation data and the transient parameters.

According to various embodiments, the detection of the transient event causing the modification in the applied fluid pressure may include detecting an event that may be indicative of a spontaneous change, or a random change, in operation of the fluid pumping system. The transient event may thus include a spontaneous interruption or an end of the flow of the contaminated fluid to the feed passage. In other embodiments, the change in operation of a fluid pumping system may include the flow of the contaminated fluid to the feed passage to be started or accelerated. In other embodiments, the change in operation of a fluid pumping system may include the operation of a fluid pumping system to be reversed. For example, the transient event causing the modification in the applied fluid pressure may involve an engine to be started or an engine load of the engine to be increased that produces a fluid pressure through the fluid pumping system. Alternatively, the transient event causing the modification in the applied fluid pressure may involve an engine load of an engine that is configured to operate the fluid pressure through the fluid pumping system to be ended or decreased. Additionally or alternatively, the transient event causing the modification in the applied fluid pressure may involve a temperature of the contaminated fluid to be changed, which may produce, or be indicative for, a change in the fluid pressure. Additionally or alternatively, the change in the temperature of the contaminated fluid may change the viscosity of the contaminated fluid, which may produce, or be indicative for, a change in the fluid pressure.

According to various embodiments, the method of determining a loading of a rotor of a centrifugal separator arrangement, the centrifugal separator arrangement being described as herein before, may include providing a transient event causing a modification in an applied fluid pressure. According to various embodiments, providing the transient event causing the modification in the applied fluid pressure may include providing an event that may be indicative of a change in operation of the fluid pumping system, which is described herein before.

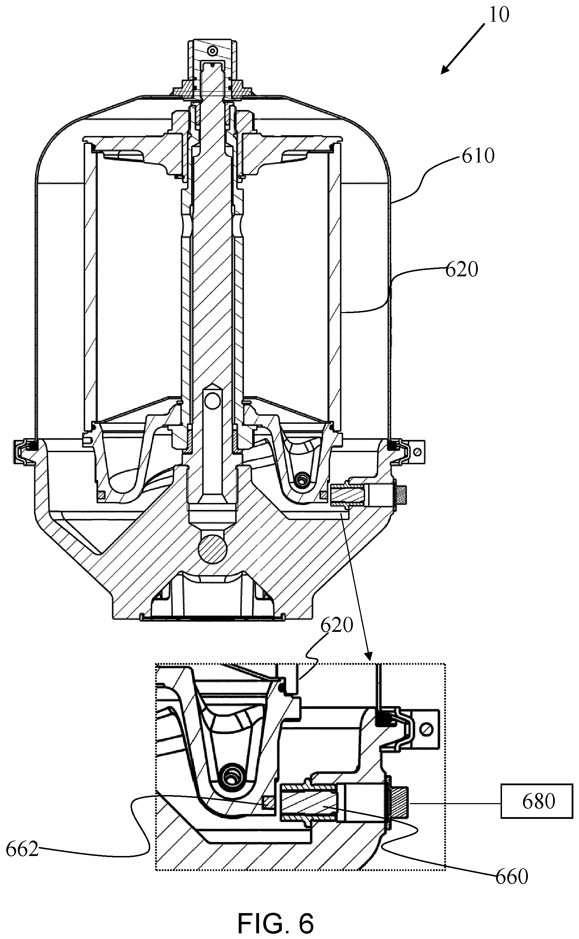

In another aspect, there may be provided a fluid cleaning system 10 configured to provide a determination of a loading of a rotor of a centrifugal separator arrangement 200 according to the methods 300, 400 and 500 as described herein, the system 10 including the centrifugal separator, the rotation sensor and a microprocessor 680. FIG. 6 illustrates the centrifugal separator arrangement, which may include some or all of the elements of the centrifugal separator arrangement 200 as described herein before. Hence, the centrifugal separator arrangement may include the rotation sensor 660, which may optionally be an electrical rotation sensor. The centrifugal separator arrangement may further include the detector configured to detect a change of a transient parameter or a transient control parameter.

According to various embodiments, the rotation sensor 660 may be attached to the centrifugal separator. The attachment of the rotation sensor 660 to the centrifugal separator may be a non-removable attachment. In embodiments in which the rotation sensor 660 is an electrical rotation sensor, the rotation sensor 660 may be selected from a hall effect sensor, a magnetoresistive sensor, a giant magnetoresistive sensor, or a combination thereof. The attachment of the rotation sensor 660 is detailed in the enlarged section of FIG. 6 and shows, exemplary, a hall effect sensor. The hall effect sensor may work together with a magnet 662, which may be attached to the rotor 620.

The microprocessor 680 may be configured to determine a loading of accumulated particulate contaminant from fluid of the rotor caused by particulate contaminant deposited on an inner surface of the wall, wherein the loading may be determined based on the rotor rotation data and the transient control parameters.

According to various embodiments, the fluid cleaning system 10 may further include a determination circuit. The determination circuit may be configured to determine whether the rotor rotation data is indicative of a positive or a negative acceleration. If the determination circuit determines that a negative acceleration is present, the determination circuit may be further configured to determine a time necessary for achieving a threshold low rotation (e.g., a rest state). Alternatively, the determination circuit may be further configured to determine a time necessary for achieving a stable state (e.g., a low slope), based on a determined reference rotation and a determined change in pressure. In some embodiments, the determination circuit may be a separate unit detached from the stationary casing 610 and may be included in the microprocessor 680.

Features that are described in the context of an embodiment may correspondingly be applicable to the same or similar features in the other embodiments. Features that are described in the context of an embodiment may correspondingly be applicable to the other embodiments, even if not explicitly described in these other embodiments. Furthermore, additions and/or combinations and/or alternatives as described for a feature in the context of an embodiment may correspondingly be applicable to the same or similar feature in the other embodiments.

In the context of various embodiments, the articles "a", "an" and "the" as used with regard to a feature or element include a reference to one or more of the features or elements.

As used herein, the term "and/or" includes any and all combinations of one or more of the associated listed items.

As used herein, each of the terms "comprising" and "including" may include the meaning of being, being made of, or consisting of. For example, "comprising a centrifugal separator arrangement" or "including a centrifugal separator arrangement" may include the meaning of being, being made of, or consisting of a centrifugal separator arrangement.

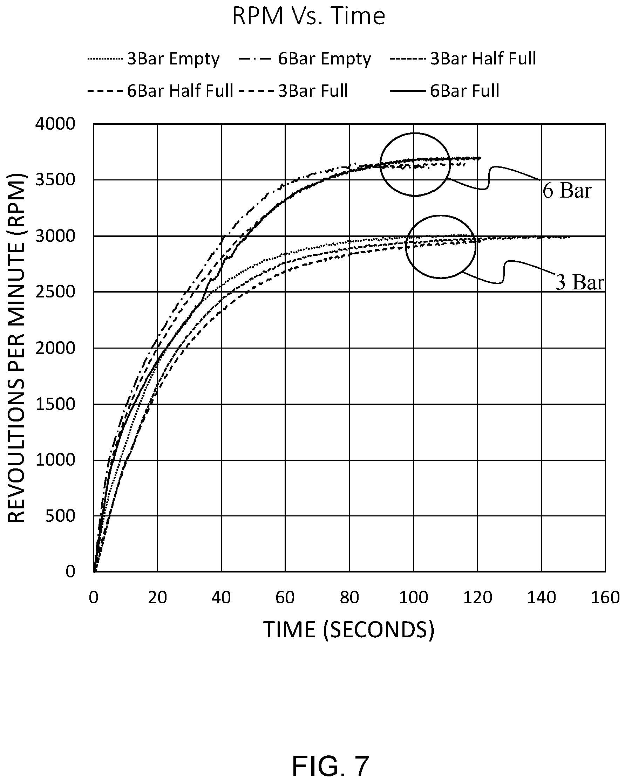

One example illustrates the time difference in accelerating a rotor at different rotor conditions. In brief, rotor speeds are relative to a fluid (e.g., oil) pressure and to a temperature of the fluid. Hence, the time difference in rotor rotation frequency in dependency of an applied fluid pressure was compared between i) a centrifugal separator arrangement that was full; a centrifugal separator arrangement that was half-full and iii) a centrifugal separator arrangement that was empty. Starting from a resting state, all three centrifugal separator arrangements were subjected to an applied fluid pressure of 3 bar and 6 bar. The results of the experiment were presented in FIG. 7, which is a graph that correlates the rotation frequency (revolutions per minute (rpm)) against time (seconds). The result was a curve comparing the achieved rotation frequency of each of the three arrangements at a given time.

FIG. 7 illustrates a graphical correlation of the rotor rotation frequency versus time. Of the three arrangements described above, the full centrifugal separator arrangements took the longest time for increasing rotation frequency. The half-full centrifugal separator arrangements took a medium amount of time for increasing rotation frequency, while the empty centrifugal separator arrangements were fastest in increasing rotation frequency. It was further shown that all three centrifugal separator arrangements accelerated to a given rotation frequency much faster at an applied pressure of 6 bar, *versus* an applied pressure of 3 bar. The area under each curve may be determined by integrating the equation of the curve and matching the obtained data against a reference table.

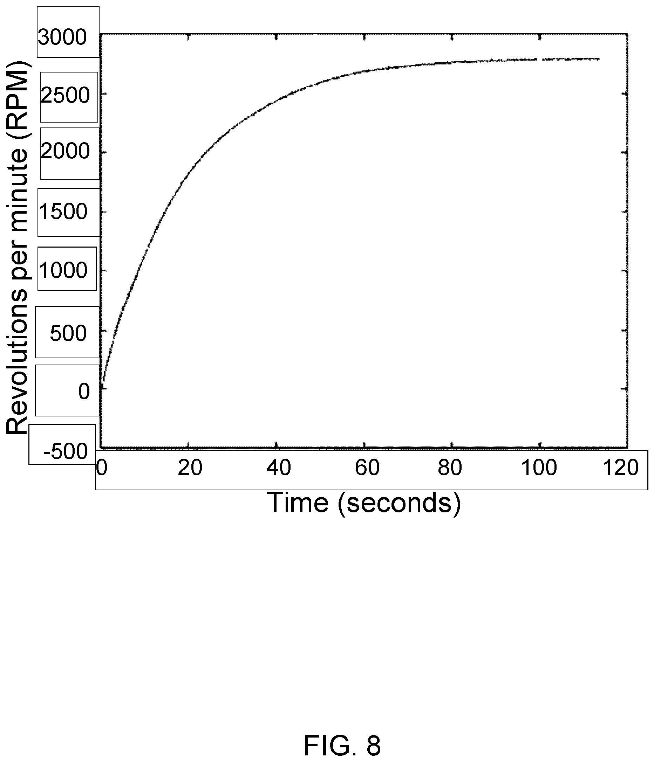

Another example illustrates an example of data processing, as shown in FIG. 8. FIG. 8 illustrates a curve fitting as exemplarily used in the present application as type of data processing based on measured points. In FIG. 8, the solid line illustrates a fitting function derived from these measured points. In this respect, the measured points have been subjected to a least-square fitting function applying a polynomial of $15^{th}$ order resulting in the solid line as shown in FIG. 8.

**Claims**

1. A method of determining a loading of a rotor (220) of a centrifugal separator arrangement (200), the arrangement (200) comprising:

   - a centrifugal separator comprising:

      a stationary casing (210) defining an enclosure;
      the rotor (220) comprising a wall (222) defining an inner volume, wherein the rotor (220) is rotatably mounted in the enclosure to rotate about a rotation axis;
      a feed passage (230) for supplying a contaminated fluid comprising particulate contaminant and allowing the contaminated fluid to flow to the inner volume of the rotor (220); and
      an egress opening (240) for releasing a cleaned fluid from the centrifugal separator, wherein a rotor outlet channel (250) is configured to allow the cleaned fluid to egress in a direction comprising a tangential component with respect to the rotation axis thereby causing an angular displacement of the rotor (220) when the contaminated fluid is applied via the feed passage (230) at a fluid pressure above a fluid pressure threshold, thereby causing the rotor (220) to rotate; and

- a rotation sensor (260) configured to measure a rotation of the rotor and produce corresponding rotor rotation data,

the method comprising:

providing transient control parameters for controlling an applied fluid pressure; producing a change in a rotation frequency of the rotor (220) by modifying the fluid pressure of the contaminated fluid applied to the feed passage (230) according to the transient control parameters; receiving, from the rotation sensor (260), rotor rotation data corresponding to the change in the rotation frequency of the rotor (220); determining a load of accumulated particulate contaminant separated from the cleaned fluid caused by the particulate contaminant deposited on an inner surface of the wall (222), wherein the loading of the rotor (220) is determined based on the rotor rotation data and the transient control parameters.

2. The method of claim 1, wherein the transient control parameters are indicative of a change in operation of a fluid pumping system.

3. The method of claim 2, wherein the transient control parameters are indicative of a start of an engine or a change in an engine load.

4. The method of claim 1, wherein the transient control parameters are indicative of a change of a temperature of the fluid and/or a change of the fluid pressure.

5. The method of any of the previous claims,

wherein fluid pressure points at different time stamps are comprised by or derived from the transient control parameters, and the rotor rotation data comprises a plurality of data points each having a different time stamp, the method further comprises matching the plurality of data points or information derived therefrom against reference data, obtaining a corresponding loading factor; and using the corresponding loading factor or a value derived therefrom as the loading of the rotor (220).

6. The method of claim 5, wherein the reference data comprises reference data points and corresponding loading factors corresponding to the reference data points.

7. The method of claim 5,

wherein the plurality of data points comprises 10 or more data points, and the reference data comprises model reference data points and corresponding loading factors corresponding to the model reference data points; the method comprises:

extracting coefficients from the plurality of data points comprised in the rotor rotation data as information derived from the plurality of the data points; and matching comprises selecting model reference data points nearest to the extracted coefficients.

8. The method of any one of the previous claims 1 to 4, further comprising providing fluid pressure data comprising two or more fluid pressure points each having a different time stamp, and further providing fluid temperature data comprising two or more fluid temperature points each having a different time stamp.

9. The method of claim 8 comprising:

- determining an expected time necessary for achieving a pre-determined rotation based on the two or more fluid pressure points at the different time stamps and the two or more fluid temperature points at the different time stamps, - determining the rotor loading based on a difference of the expected time and a measured time necessary for achieving a pre-determined rotation.

10. The method of claim 9, wherein

(i) the pre-determined rotation comprises a rotation frequency of an operation mode and an initial state is a resting state of zero rotation frequency; or (ii) an initial state is an operation mode with an operation rotation frequency different than zero and the pre-determined rotation comprises a rotation frequency lower than the operation rotation frequency, optionally wherein the rotation frequency is zero.

11. The method of claim 9 further comprising: determining whether a direction of change in rotation frequency of the rotor is indicative of a positive acceleration or indicative of a negative acceleration.

**12.** The method of claim 8 comprising:

- determining an expected rotation frequency expected from a pre-determined time based on the two or more fluid pressure points at the different time stamps and the two or more fluid temperature points at the different time stamps,
- determining the rotor loading based on a difference of the expected rotation frequency with a measured rotation frequency at the different time stamps.

**13.** The method of any one of claims 8 to 12, wherein the fluid pressure data at the different time stamps are comprised by or derived from the transient control parameters.

**14.** A fluid cleaning system (10) configured to provide a determination of a loading of a rotor (620) of a centrifugal separator arrangement according to the method of any one of the previous claims, the system (10) comprising the centrifugal separator, the rotation sensor (660) and a microprocessor (680), and optionally, wherein the rotation sensor (660) is attached to the centrifugal separator, optionally wherein the rotation sensor (660) is non-removably attached.

**15.** The system (10) of claim 14, further comprising a determination circuit, wherein the determination circuit is configured to determine whether the rotor rotation data is indicative of a positive or a negative acceleration, and, if determined that it is a negative acceleration, the determination circuit is further configured to

- determine a time necessary for achieving a threshold low rotation; or
- determine a time necessary for achieving a stable state,

based on a determined reference rotation and a determined change in pressure.

**Patentansprüche**

**1.** Verfahren zum Ermitteln einer Rotorbelastung (220) einer Zentrifugalabscheideranordnung (200), wobei die Anordnung (200) umfasst:

- einen Zentrifugalabscheider umfassend:

ein eine Umschließung definierendes stationäres Gehäuse (210);
den Rotor (220), der eine ein Innenvolumen definierende Wand (222) umfasst, wobei der Rotor (220) drehbar in der Umschließung angebracht ist, um sich um eine Rotationsachse zu drehen;
einen Zufuhrkanal (230) zum Zuführen eines verunreinigten Fluids, das Partikelverunreinigungen enthält, und zum Leiten des verunreinigten Fluids in das Innenvolumen des Rotors (220); und
eine Auslassöffnung (240) zum Ablassen eines gereinigten Fluids aus dem Zentrifugalabscheider,
wobei ein Rotorauslasskanal (250) so konfiguriert ist, dass er das gereinigte Fluid in einer Richtung austreten lässt, die eine tangentiale Komponente in Bezug auf die Rotationsachse umfasst, wodurch eine Winkelverschiebung des Rotors (220) verursacht wird, wenn das verunreinigte Fluid über den Zufuhrkanal (230) mit einem Fluiddruck oberhalb eines Fluiddruckschwellenwerts zugeführt wird, wodurch der Rotor (220) in Rotation versetzt wird; und

- einen Rotationssensor (260), der so konfiguriert ist, dass er eine Rotation des Rotors misst und entsprechende Rotorrotationsdaten erzeugt,

wobei das Verfahren umfasst:

Bereitstellen von Übergangssteuerparametern zum Steuern eines zugeführten Fluiddrucks;
Erzeugen einer Änderung der Rotationsfrequenz des Rotors (220) durch Modifizieren des Fluiddrucks des verunreinigten Fluids, das dem Zufuhrkanal (230) zugeführt wird, gemäß den Übergangssteuerparametern;
Empfangen von Rotorrotationsdaten, die der Änderung der Rotationsfrequenz des Rotors (220) entsprechen, vom Rotationssensor (260);
Bestimmen einer Belastung an angesammelten Partikelverunreinigungen, die von dem gereinigten Fluid getrennt und durch die Partikelverunreinigungen verursacht wurden, die sich auf einer Innenfläche der Wand (222) abgelagert haben,
wobei die Belastung des Rotors (220) auf der Grundlage der Rotorrotationsdaten und der Übergangssteuerparameter bestimmt wird.

**2.** Verfahren nach Anspruch 1,
wobei die Übergangssteuerparameter eine Änderung im Betrieb eines Fluidpumpensystems anzeigen.

**3.** Verfahren nach Anspruch 2,
wobei die Übergangssteuerparameter einen Start eines Motors oder eine Änderung einer Motorlast anzeigen.

4. Verfahren nach Anspruch 1,
wobei die Übergangssteuerparameter eine Änderung der Temperatur des Fluids und/oder eine Änderung des Fluiddrucks anzeigen.

5. Verfahren nach einem der obigen Ansprüche,

wobei Fluiddruckpunkte zu unterschiedlichen Zeitstempeln durch die Übergangssteuerparameter enthalten sind oder aus diesen abgeleitet werden, und
die Rotorrotationsdaten eine Vielzahl von Datenpunkten mit jeweils unterschiedlichen Zeitstempeln umfassen,
das Verfahren umfasst ferner das Abgleichen der Vielzahl von Datenpunkten oder der daraus abgeleiteten Informationen mit Referenzdaten, um einen entsprechenden Belastungsfaktor zu erhalten; und
die Verwendung des entsprechenden Belastungsfaktors oder eines daraus abgeleiteten Werts als Belastung des Rotors (220).

6. Verfahren nach Anspruch 5,
wobei die Referenzdaten Referenzdatenpunkte und entsprechende Belastungsfaktoren umfassen, die den Referenzdatenpunkten entsprechen.

7. Verfahren nach Anspruch 5,

wobei die Vielzahl von Datenpunkten 10 oder mehr Datenpunkte umfasst und
die Referenzdaten Modellreferenzdatenpunkte und entsprechende Belastungsfaktoren umfassen, die den Modellreferenzdatenpunkten entsprechen; das Verfahren umfasst:

das Extrahieren von Koeffizienten aus der Vielzahl von Datenpunkten, die in den Rotorrotationsdaten enthalten sind, als Informationen, die aus der Vielzahl von Datenpunkten abgeleitet sind; und
das Abgleichen umfasst das Auswählen von Modellreferenzdatenpunkten, die den extrahierten Koeffizienten am nächsten liegen.

8. Verfahren nach einem der obigen Ansprüche 1 bis 4,
das ferner das Bereitstellen von Fluiddruckdaten umfasst, die zwei oder mehr Fluiddruckpunkte mit jeweils unterschiedlichen Zeitstempeln umfassen, und das ferner Fluidtemperaturdaten bereitstellt, die zwei oder mehr Fluidtemperaturpunkte mit jeweils unterschiedlichen Zeitstempeln haben.

9. Verfahren nach Anspruch 8 umfassend:

- die Bestimmung einer erwarteten Zeit, die zum Erreichen einer vorbestimmten Rotation erforderlich ist, basierend auf den zwei oder mehr Fluiddruckpunkten zu den unterschiedlichen Zeitstempeln und den zwei oder mehr Fluidtemperaturpunkten zu den unterschiedlichen Zeitstempeln,
- die Bestimmung der Rotorbelastung auf der Grundlage einer Differenz zwischen der erwarteten Zeit und einer gemessenen Zeit, die zum Erreichen einer vorbestimmten Rotation erforderlich ist.

10. Verfahren nach Anspruch 9, wobei

(i) die vorbestimmte Rotation eine Rotationsfrequenz eines Betriebsmodus umfasst und ein Anfangszustand ein Ruhezustand mit einer Rotationsfrequenz von Null ist; oder
(ii) ein Anfangszustand ein Betriebsmodus mit einer Betriebsrotationsfrequenz ungleich Null ist und die vorbestimmte Rotation eine Rotationsfrequenz umfasst, die niedriger ist als die Betriebsrotationsfrequenz, wobei optional die Rotationsfrequenz Null ist.

11. Verfahren nach Anspruch 9 ferner umfassend:
die Bestimmung, ob eine der Änderungsrichtung der Rotationsfrequenz des Rotors eine positive Beschleunigung oder eine negative Beschleunigung anzeigt.

12. Verfahren nach Anspruch 8 umfassend:

- die Bestimmung einer erwarteten Rotationsfrequenz, die von einem vorbestimmten Zeitpunkt aus erwartet wird, basierend auf den zwei oder mehr Fluiddruckpunkten zu den unterschiedlichen Zeitstempeln und den zwei oder mehr Fluidtemperaturpunkten zu den unterschiedlichen Zeitstempeln,
- die Bestimmung der Rotorbelastung auf der Grundlage einer Differenz zwischen der erwarteten Rotationsfrequenz und einer gemessenen Rotationsfrequenz zu den verschiedenen Zeitstempeln.

13. Verfahren nach einem der Ansprüche 8 bis 12, wobei die Fluiddruckdaten zu den verschiedenen Zeitstempeln durch die Übergangssteuerparameter enthalten sind oder von diesen abgeleitet werden.

14. Fluidreinigungssystem (10), das so konfiguriert ist, dass es eine Bestimmung einer Rotorbelastung (620) einer Zentrifugalabscheideranordnung gemäß dem Verfahren eines der obigen Ansprüche bereitstellt, wobei das System (10) den Zentrifugalseparator, den Rotationssensor (660) und einen Mikroprozessor (680) umfasst, und optional wobei der Rotationssensor (660) an dem Zentrifugalabscheider angebracht ist, optional wobei der Rotationssensor (660) nicht entfernbar angebracht ist.

**15.** System (10) nach Anspruch 14,

ferner umfassend eine Bestimmungsschaltung, wobei die Bestimmungsschaltung so konfiguriert ist, dass sie bestimmt, ob die Rotorrotationsdaten eine positive oder eine negative Beschleunigung anzeigen, und, wenn bestimmt wird, dass es sich um eine negative Beschleunigung handelt, die Bestimmungsschaltung ferner so konfiguriert ist,

- eine Zeit zu bestimmen, die erforderlich ist, um eine Schwellenwert-Niedrigrotation zu erreichen; oder
- eine Zeit zu bestimmen, die zum Erreichen eines stabilen Zustands erforderlich ist,

basierend auf einer ermittelten Referenzrotation und einer ermittelten Druckänderung.

## Revendications

**1.** Procédé pour déterminer la charge d'un rotor (220) d'un agencement de séparation centrifuge (200), l'agencement (200) comprenant:

- un séparateur centrifuge comprenant:

un boîtier fixe (210) définissant une enceinte;
le rotor (220) comprenant une paroi (222) définissant un volume intérieur, dans lequel le rotor (220) est monté de manière rotative dans l'enceinte pour tourner autour d'un axe de rotation;
un passage d'alimentation (230) pour fournir un fluide contaminé comprenant des contaminants particulaires et permettre au fluide contaminé de s'écouler vers le volume intérieur du rotor (220); et
une ouverture de sortie (240) pour libérer un fluide purifié du séparateur centrifuge, dans lequel un canal de sortie du rotor (250) est configuré pour permettre au fluide purifié de sortir dans une direction comprenant une composante tangentielle par rapport à l'axe de rotation, provoquant ainsi un déplacement angulaire du rotor (220) lorsque le fluide contaminé est appliqué via le passage d'alimentation (230) à une pression de fluide supérieure à un seuil de pression de fluide, provoquant ainsi la rotation du rotor (220); et

- un détecteur de rotation (260) configuré pour mesurer la rotation du rotor et produire des données de rotation du rotor correspondantes,

le procédé comprenant:

la fourniture de paramètres de contrôle transitoires pour contrôler une pression de fluide appliquée;
la production d'un changement dans la fréquence de rotation du rotor (220) en modifiant la pression du fluide contaminé appliqué au passage d'alimentation (230) selon les paramètres de contrôle transitoire;
la réception, à partir du détecteur de rotation (260), de données de rotation du rotor correspondant au changement de la fréquence de rotation du rotor (220);
déterminer une charge de contaminants particulaires accumulés séparés du fluide purifié, causée par les contaminants particulaires déposés sur une surface intérieure de la paroi (222),
dans lequel la charge du rotor (220) est déterminée sur la base des données de rotation du rotor et des paramètres de contrôle transitoires.

**2.** Procédé selon la revendication 1, dans lequel les paramètres de contrôle transitoires indiquent un changement dans le fonctionnement d'un système de pompage de fluide.

**3.** Procédé selon la revendication 2, dans lequel les paramètres de contrôle transitoires indiquent un démarrage d'un moteur ou un changement dans la charge d'un moteur.

**4.** Procédé selon la revendication 1, dans lequel les paramètres de contrôle transitoires indiquent un changement de température du fluide et/ou un changement de pression du fluide.

**5.** Procédé selon l'une quelconque des revendications précédentes,

dans lequel les points de pression du fluide à différents horodatages sont compris dans les paramètres de contrôle transitoires ou dérivés de ceux-ci, et
les données de rotation du rotor comprennent une pluralité de points de données ayant chacun un horodatage différent,
le procédé comprend en outre la mise en correspondance de la pluralité de points de données ou d'informations dérivées de ceux-ci avec des données de référence pour obtenir un facteur de charge correspondant; et

l'utilisation du facteur de charge correspondant ou d'une valeur dérivée de celui-ci comme charge du rotor (220).

6. Procédé selon la revendication 5, dans lequel les données de référence comprennent des points de données de référence et des facteurs de charge correspondants correspondant aux points de données de référence.

7. Procédé selon la revendication 5,

dans lequel la pluralité de points de données comprend 10 points de données ou plus, et les données de référence comprennent des points de données de référence de modèle et des facteurs de charge correspondants correspondant aux points de données de référence de modèle; le procédé comprend:

l'extraction de coefficients à partir de la pluralité de points de données compris dans les données de rotation du rotor en tant qu'informations dérivées de la pluralité de points de données; et la mise en correspondance comprend la sélection des points de données de référence de modèle les plus proches des coefficients extraits.

8. Procédé selon l'une quelconque des revendications 1 à 4, comprenant en outre la fourniture de données de pression du fluide comprenant deux points de pression du fluide ou plus, chacun ayant un horodatage différent, et la fourniture en outre de données de température du fluide comprenant deux points de température du fluide ou plus, chacun ayant un horodatage différent.

9. Procédé selon la revendication 8 comprenant:

- la détermination d'un temps prévu nécessaire pour obtenir une rotation prédéterminée sur la base des deux ou plusieurs points de pression du fluide aux horodatages différents et des deux ou plusieurs points de température du fluide aux horodatages différents,
- la détermination de la charge du rotor sur la base d'une différence entre le temps prévu et un temps mesuré nécessaire pour obtenir une rotation prédéterminée.

10. Procédé selon la revendication 9, dans lequel

(i) la rotation prédéterminée comprend une fréquence de rotation d'un mode de fonctionnement et un état initial est un état de repos avec une fréquence de rotation nulle; ou
(ii) un état initial est un mode de fonctionnement avec une fréquence de rotation de fonctionnement différente de zéro et la rotation prédéterminée comprend une fréquence de rotation inférieure à la fréquence de rotation de fonctionnement, optionnellement dans lequel la fréquence de rotation est nulle.

11. Procédé selon la revendication 9 comprenant en outre:
la détermination si une variation de la fréquence de rotation du rotor indique une accélération positive ou une accélération négative.

12. Procédé selon la revendication 8 comprenant:

- la détermination d'une fréquence de rotation attendue à partir d'un temps prédéterminé sur la base des deux ou plusieurs points de pression du fluide à différents horodatages et des deux ou plusieurs points de température du fluide à différents horodatages,
- la détermination de la charge du rotor sur la base d'une différence entre la fréquence de rotation attendue et une fréquence de rotation mesurée à différents horodatages.

13. Procédé selon l'une quelconque des revendications 8 à 12, dans lequel les données de pression du fluide à différents horodatages sont comprises dans ou dérivées des paramètres de contrôle transitoires.

14. Système de nettoyage de fluide (10) configuré pour fournir une détermination d'une charge d'un rotor (620) d'un agencement de séparation centrifuge selon le procédé de l'une quelconque des revendications précédentes, le système (10) comprenant le séparateur centrifuge, le détecteur de rotation (660) et un microprocesseur (680), et optionnellement, dans lequel le détecteur de rotation (660) est fixé au séparateur centrifuge, optionnellement dans lequel le détecteur de rotation (660) est fixé de manière non amovible.

15. Système (10) selon la revendication 14,

comprenant en outre un circuit de détermination, dans lequel le circuit de détermination est configuré pour déterminer si les données de rotation du rotor indiquent une accélération positive ou négative, et, s'il est déterminé qu'il s'agit d'une accélération négative, le circuit de détermination est en outre configuré pour

- déterminer un temps nécessaire pour atteindre un seuil de rotation faible; ou
- déterminer un temps nécessaire pour atteindre un état stable,

sur la base d'une rotation de référence déterminée et d'un changement de pression déterminé.

FIG. 1

FIG. 2A

FIG. 2B

300

302 — providing transient control parameters for controlling an applied fluid pressure

↓

304 — producing a change in a rotation frequency of the rotor by modifying the fluid pressure of a contaminated fluid applied to a feed passage according to the transient control parameters

↓

306 — receiving, from a rotation sensor, rotor rotation data corresponding to the change in the rotation frequency of the rotor

↓

308 — determining a load of accumulated particulate contaminant separated from a cleaned fluid caused by a particulate contaminant deposited on an inner surface of a wall, wherein the loading of the rotor is determined based on the rotor rotation data and the transient control parameters

FIG. 3

400

402 — providing transient control parameters for controlling an applied fluid pressure

404 — producing a change in a rotation frequency of the rotor by modifying the fluid pressure applied to a feed passage according to the transient control parameters

406 — receiving, from a rotation sensor, rotor rotation data corresponding to the change in the rotation frequency of the rotor

408 — determining a load of accumulated particulate contaminant separated from a cleaned fluid caused by a particulate contaminant deposited on an inner surface of a wall, wherein the loading of the rotor is determined based on the rotor rotation data and the transient control parameters

410 — wherein fluid pressure points at different times stamps are included by or derived from the transient control parameters, and the rotor rotation data include a plurality of data points of different time stamps, the method further includes matching the plurality of data points or information derived therefrom against reference data, obtaining a corresponding loading factor; and using the corresponding loading factor or a value derived therefrom as the loading of the rotor

FIG. 4

*500*

502 — providing transient control parameters for controlling an applied fluid pressure

504 — producing a change in a rotation frequency of the rotor by modifying the fluid pressure applied to the feed passage according to the transient control parameters

506 — receiving, from a rotation sensor, rotor rotation data corresponding to the change in the rotation frequency of the rotor

508 — determining a load of accumulated particulate contaminant separated from a cleaned fluid caused by a particulate contaminant deposited on an inner surface of a wall, wherein the loading of the rotor is determined based on the rotor rotation data and the transient control parameters

512 — providing fluid pressure data including two or more fluid pressure points each having a different time stamp, and further providing fluid temperature data including two or more fluid pressure points each having a different time stamp

FIG. 5

FIG. 6

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017077294 A